# EUROPEAN PATENT APPLICATION

(11) **EP 2 538 381 A1**
(43) Date of publication of application: **26.12.2012**
(21) Application number: 11305785.5
(22) Date of filing: 21.06.2011
(51) Int. Cl.: G06Q 20/00, G06F 21/00

(54) **Method of delivery of a service on a device by using a biometric signature, system and computer program for delivering the service**

(71) Applicant: Alcatel Lucent, 75007 Paris (FR)
(72) Inventor: Helbert, Emmanuel, 67400 ILLKIRCH (FR)
(74) Representative: Hervouet, Sylvie

(57) **Abstract**

The present invention provides a method of delivery of a service on a device communicating with a communication system. The method includes the steps of: a) for a user requesting said service, inputting a first data structure associating said user with said service to be delivered; b) for the communication system: extracting a first biometric signature from said first data structure and storing a first biometric identification data comprising said first data structure and said first biometric signature; and conditioning a subsequent delivery of said service on said device on comparing said first biometric identification data with a second biometric identification data comprising a second data structure inputted by the user on said device and a second biometric signature extracted from said second data structure. Said service is delivered on said device if said second data structure matches said first data structure and said second biometric signature matches said first biometric signature. The present invention provides also the associated system and computer program.

## Description

### BRIEF DESCRIPTION OF THE DRAWINGS

The invention relates generally to a method of delivery of a service on a device after the biometric authentication of the user, and associated system and computer program product.

### BACKGROUND OF THE INVENTION

Mobile phones give access to many applications such as transport application, reservation and even product purchases. Access to these applications is generally conditioned on the authentication of the user and possibly, a payment. Several methods of authentication of user exist. Most traditional is that consisting in asking the user a secret code, also known as "PIN code" and comparing it with a reference code stored in a smart card for example. Another method consists in questioning the user in order to retrieve a response which he is supposed to be the only one to know, for example his date of birth and his birthplace. Other methods known as biometric identification consist in analyzing a physical characteristic of the user, for example the digital fingerprints, the tone of the voice, a signature written with the hand on a touchscreen, or the bottom of the retina. Each one of these biometric authentication methods allows giving the access to an application or a service.

The applications to be secured may use one or the other of these methods. The choice is carried out according to the level of security wished by the application provider, and the type of hardware equipment placed at the disposal of the user. The authentication based on a secret code is rather adapted to applications usable on mainstream device. But the code can be discovered by unauthorized people and can be used many times before being changed. The security level of this type of identification is thus low. The biometric identification is generally used on industrial equipment such as gatekeepers of buildings, or automatic bank teller machines. Such an authentication is generally expensive.

In the case of portable devices such as PC, PDA or mobile phones communicating with a network, the authentication of the device is added to the authentication of the user, by the PIN code for example. In this way, an application server connected to the network can make sure that the device delivering the application is allowed to deliver the service provided by the application. But the PIN code is generally a short number and thus the security level of access of the communication service is low. The present invention increases the level of security allowing the delivery of a service.

### SUMMARY OF THE INVENTION

According to an embodiment, a method of delivery of a service on a device communicating with a communication system is provided. The method includes the steps of:
a) for a user requesting said service, inputting a first data structure associating said user with said service to be delivered;
b) for the communication system:
   extracting a first biometric signature from said first data structure and storing a first biometric identification data comprising said first data structure and said first biometric signature;
   conditioning a subsequent delivery of said service on said device on comparing said first biometric identification data with a second biometric identification data comprising a second data structure inputted by the user on said device and a second biometric signature extracted from said second data structure, said service being delivered on said device if said second data structure matches said first data structure and said second biometric signature matches said first biometric signature.

The delivery of the service is conditioned by a double comparison: a data structure inputted by the user and specific to this service, and the biometric signature specific to this user. This method allows thus a real user authentication enabling to deliver securely a determined service.

According to another embodiment, the device is a portable device and the delivery of the service is further conditioned on the presence of said portable device at a predetermined geographic location. In this manner, the triggering of the delivery of the service arises when this portable device is in a given place. According to another embodiment, the presence of the portable device at a predetermined geographic location is determined by the portable device. In this manner, the delivery of the service is mainly managed by the portable device, the portable device determining if it is close to the location where the service can be delivered.

According to another embodiment, the delivery of the service is further conditioned on a predetermined temporal indication. In this manner, the service requested by the user is securely delivered at the right time. According to another embodiment, the delivery of the service is further conditioned on a current time provided by the device matching the predetermined temporal indication. In this manner, the delivery of the service is mainly managed by the device, the device determining if it is the time of delivery of the service. According to another embodiment, the first and second data structures comprise: voice-related data recorded by the user, handwriting data recorded by the user, or tactile movement data recorded by the user. In this manner, there are several biometric methods to securely authenticate the user.

According to another embodiment, the method further comprises, for the user, selecting a type of first or second data structures among at least two possible types chosen among voice-related data, handwriting data and tactile movement data. In this manner, if several biometric methods to authenticate the user are available, the user can select the one he wants to use for delivering the service.

According to another embodiment, the user inputs several first data structures and several second data structures, the service being delivered if each of said second data structure matches said each of first data structure. In this manner, the security of the authentication is strengthened.

In another embodiment, a system of delivery of a service on a device communicating with a communication system is provided. Said system comprises:
a) first input means enabling a user to input a first data structure associating said user with said service to be delivered,
b) processing means on the communication system adapted to extract a first biometric signature from said first data structure,
c) storing means on the communication system adapted to store a first biometric signature identification data comprising the first data structure and the first biometric signature,
d) second input means on said device enabling the user to input a second data structure when the service has to be delivered,
e) processing means on the communication system being further adapted to condition a subsequent delivery of said service on said device on comparing said first biometric identification data with a second biometric identification data comprising said second data structure and a second biometric signature extracted from said second data structure, said service being delivered on said device if said second data structure matches said first data structure and said second biometric signature matches said first biometric signature.

In another embodiment, a computer program product is provided. Said computer program product comprises computer-executable instructions for delivering a service to a device, said instructions performing extraction of a first biometric signature from a first data structure inputted by a user, the storage of a first biometric identification data comprising said first data structure and said first biometric signature,
said instructions further performing comparing said first biometric identification data with a second biometric identification data comprising a second data structure inputted by the user on said device and a second biometric signature extracted from said second data structure,
said instructions further conditioning the delivery of said service on said device on said second data structure matching said first data structure and said second biometric signature matching said first biometric signature.

### BRIEF DESCRIPTION OF THE DRAWINGS

Some embodiments of device and/or methods in accordance with embodiments of the present invention are now described, by way of example only, and with reference to the accompanying drawings, in which:
Figure 1 schematically represents a block diagram of a communication system including communication devices in which embodiments of the invention may be implemented;
Figure 2 represents a flow diagram illustrating an embodiment of the present invention;
Figure 3 represents a detailed flowchart illustrating example operation of the creation of a data structure for delivering a service;
Figure 4 represents a detailed flowchart illustrating example operation of the delivering of a service defined by the user;
Figure 5 illustrates the exchanges between several equipments and the user for the creation of structure of delivery of a service, according to an embodiment of the present invention;
Figure 6 illustrates the main exchanges between several equipments and the user for the delivering of the service, according to an embodiment of the present invention.

### DETAILED DESCRIPTION OF EXAMPLE EMBODIMENTS

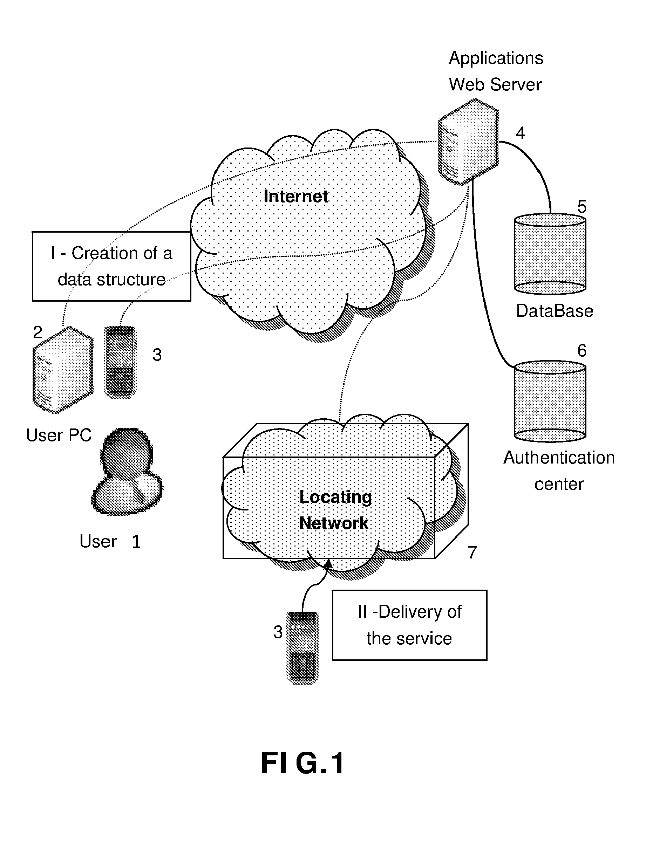

FIGS. 1-6 and the following description depict specific exemplary embodiments of the invention to teach those skilled in the art how to make and use the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

Figure 1 illustrates the various elements implemented by the present invention according to an embodiment. A user 1 connects to a network by using his personal computer PC 2 or his portable device 3. Portable device 3 may be a PDA or a mobile phone, or in a general way any portable device able to communicate with a wireless network. Alternatively, all of the operations may be carried out from portable device 3. The user selects a service and connects to a site application 4 allowing delivery of this service. This service may be for example: the access to a room of spectacle, the remote loading of audio-visual documents, the delivery of a transport document such as a plane ticket or train ticket, the control of entry in a hotel or a car park, etc. Application server 4 is connected to a database 5 adapted for storage of information making it possible to deliver services. According to an improvement, application server 4 may also be connected to an authentication center 6 that performs the biometric authentication of the user. The authentication data initialized during the initialization of the service are transmitted to authentication center 6. According to the results of authentication of user 1 and the matching of data identifying the service, this service is delivered.

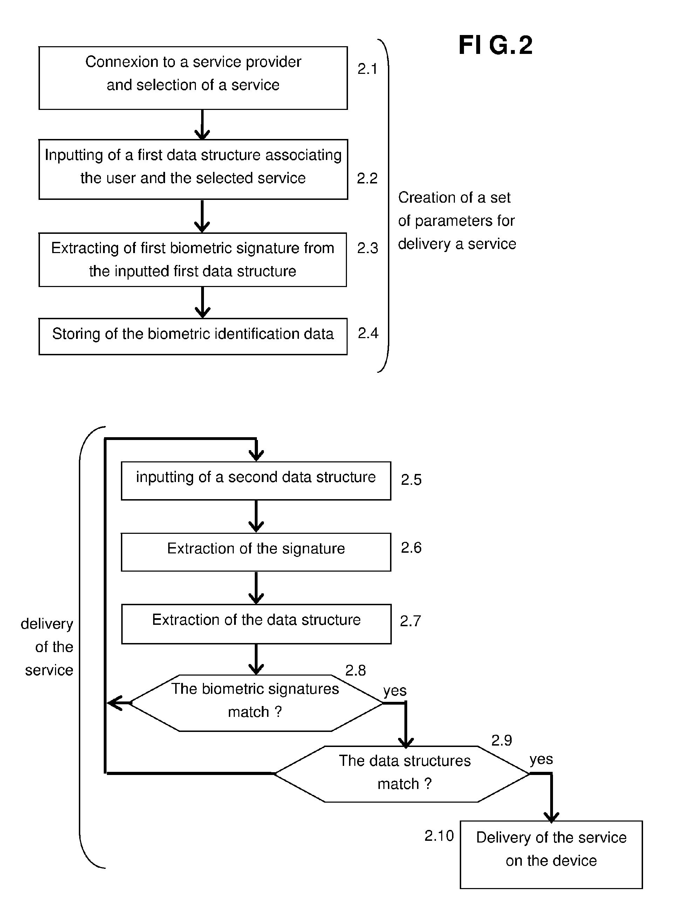

The invention allowing delivering a service comprises at least two steps: the creation of a set of parameters and the use of this set of parameters for delivering the service. These two steps are illustrated by the two parts of the flow diagrams of figure 2.

At step 2.1, the user uses his personal computer PC 2 or his portable device 3 to launch a connection with a service provider and to select a service, such as those previously listed. Once the service has been defined, at step 2.2 the user inputs on his personal computer PC 2 or his portable device 3 a first data structure allowing for the later the delivery of this service. This data structure is specific to the user and to the service to deliver. At step 2.3, a first biometric signature is extracted from the inputted first data structure. At step 2.4, a biometric identification data comprising at least the first data structure and the first biometric signature authenticating to the user, is stored in the network. At this time, the set of parameters for delivering the service is created.

When the service is to be delivered, the user inputs a second data structure on his personal computer PC 2 or his portable device 3 (step 2.5). The parameters of the stored first biometric identification data are retrieved. At step 2.6 and step 2.7, a second biometric signature authenticating the user and the data structure specific to the service are extracted from the second data structure. At step 2.8, the second biometric signature extracted from the second inputted data structure is compared with the first stored biometric signature extracted from the first data structure. If the two signatures do not match, then the service is not delivered and the user may be asked to input again another second data structure or the system may propose general services to the user (step 2.5). At step 2.9, the second inputted data structure is compared with the first stored data structure. If the two data structures do not match, then the service is not delivered and the user may be asked to input another second data structure (step 2.5). Else, if the two items match, the service is delivered on device 2 or 3 (step 2.10).

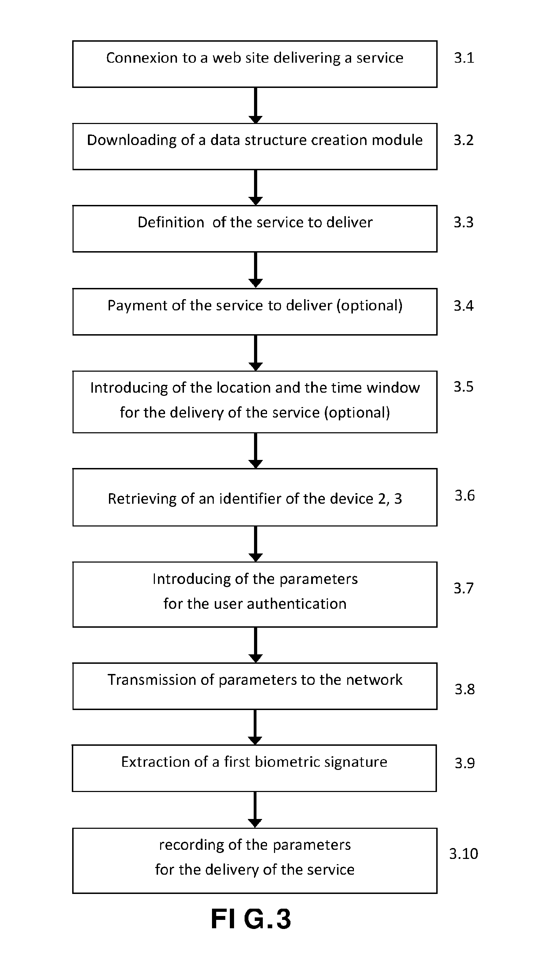

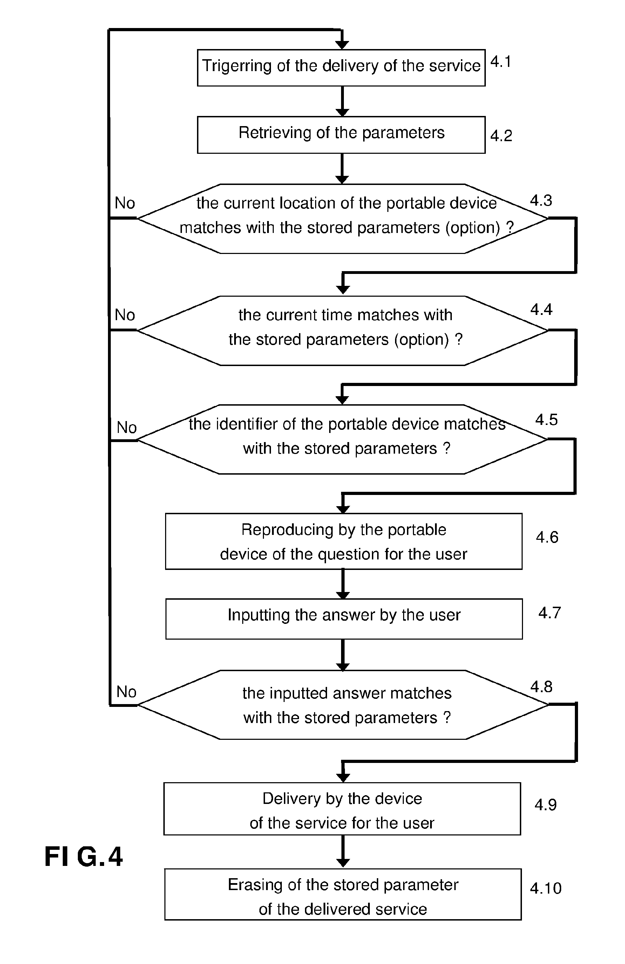

Figures 3 and 4 represent a detailed flowchart of the operations respectively for creation of the set of parameters and for delivery of the service, according to a preferred embodiment of the present invention:

The set of parameters may comprise control parameters and data accessible to a user such as:
- characteristics of the service to be delivered,
- parameters defining the circumstances of delivery of the service,
- data displayed when the service will be delivered.

According to a preferred embodiment, at step 3.1, the user uses his personal computer PC 2 or mobile device 3 to launch a connection to an Internet site by using a URL. At step 3.2, Internet site uploads in device 2 or 3 a software module for the creation of a set of parameters for delivering the service. With the help of an interface such as a screen and a keyboard, the user defines the characteristics of the desired service, for example the purchasing of a transport ticket (step 3.3).

In an optional manner, at step 3.4, the user carries out a payment allowing for the delivery of the service. Payment may intervene at any time, including during the delivery of the service. According to a variant, if the transacted service is free, payment may be skipped. Then, at step 3.5, the user introduces the control parameters allowing later triggering the delivery of the service. These parameters may be a location and/or a time window of delivery. Uploaded module extracts an identifier of personal computer PC 2 or portable device 3 which will deliver the service when the circumstances are joined together (step 3.6). If portable device 3 is a mobile phone, the identifier may be the International Mobile Equipment Identity (IMEI). Advantageously, data structure for delivering the service and portable device 3 are identified by a cookie which will be sent to application server 4 via the network during the delivery of the service.

At step 3.7, the user introduces his authentication data. According to a first embodiment, the user introduces on personal computer PC 2 or portable device 3 two vocal sequences by using a microphone. The first sequence is a question, for example "which color is your car? " and the second sequence is the answer to this question, for example "blue", that is used as first data structure to authenticate the user. Preferably, the user is the only one to know the answer to this question so that the authentication is more secure. The first sequence will be played by personal computer PC 2 or portable device 3 under the system control. At this time, the user will input a second data structure that will compare with the stored first data structure.

Other authentication means may be used according to the personal computer PC 2 or portable device 3 fittings. First sequence may be a text displayed on a screen. The user may draw a signature or any other graphic symbol on a touch screen. In this case, he introduces a first vocal sequence indicating for example: "write the initials of your name on the touch screen". At the time of the authentication, the check will relate both to the drawn letters (i.e. "A", "B") and the way to write them which is specific to the writer. Another variant consists in equipping personal computer PC 2 or portable device 3 with a fingerprint detector. In this case, the displayed question may be:
"Put the annular of the left hand on the fingerprint reader".

It is to be noted that the authentication of the user by fingerprint may be personalized for each service to be delivered, because the user may define which one of his ten fingers to use. Thus, at the time of the delivery of the service, the user authenticates himself by a simple data input and since the user authentication data changes for service, the security level is very great. If personal computer PC 2 or portable device 3 is stolen, the user authentication will prevent that the service is delivered to an unauthorized people. Then, at step 3.8, the parameters introduced at step 3.7 are transmitted to the network. These parameters comprise for example, the inputted first data structure, the place of delivery of the service or a software module activated during the delivery of the service, the time of delivery. These parameters may also be stored in personal computer PC 2 or portable device 3.

At step 3.9, a first biometric signature is extracted from the inputted data structure by the network (for example, by the authentication center 6). The set of parameters of control and data comprising the first biometric signature is then stored in database 5 of the network (step 3.10).

At the end of creation, the set of parameters for delivering the service is stored in database 5 of application server 4 and advantageously at least a part in personal computer PC 2 or portable device 3.

At the time of the delivery of the service, the authentication center controls the identifier of personal computer PC 2 or portable device 3 automatically and transmits the first vocal sequence.

We now describe how the service is subsequently delivered to the user.

Figure 4 illustrates an example of method for delivering a service to a user. In a first step (step 4.1), the delivery of the service is triggered. This event is defined by the user and specified in the data structure stored at step 3.8. Network and/or personal computer PC 2 or portable device 3 may permanently control the coming of this event. Here are examples of the events triggering delivery of service:
I- presence of device mobile 3 in a certain place,
II- use of the device 2, 3 in a time window,
III- authentication of the device 2, 3
IV- user authentication.

When one or several of these events arise(s), the parameters for delivering the service are retrieved from the network and/or personal computer PC 2 or portable device 3 (step 4.2). If the service is delivered by portable device 3, step 4.3 consists in locating it and checking if its current location matches with the place of delivery of the service. Other events may trigger the delivery of the service. The location of mobile device 3 is determined either by itself, or by the network. In a first variant, the portable device 3 is equipped by a localization means, such as a GPS (Global Positioning System) module. This localization means delivers in real-time the geographical coordinates of the location of mobile device 3. According to this variant, the memory of portable device 3 stores the geographical area where the service will be delivered. The geographical area is defined for example by the coordinates of a point and a distance from this point. Portable device 3 may be also located by triangulation techniques by measuring the transport duration of radio signals (or "Timing Advance") emitted by neighboring fixed bases, such as macro cell station. When portable device 3 detects that its location is in the zone defined by the user, it sends a triggering signal to the network by indicating an identifier of the service to be delivered, or simpler, the identifier of portable device 3.

In a second variant, the radio operator network is able to locate the portable device 3. This location is also performed using the triangulation techniques by measuring the transport duration (or "Timing Advance"). The radio operator network may be of cellular type like defined in standards Global System Mobility (GSM), 3GPP, or Long Term Evolution technology (4G/LTE), but also Wi-Fi, or any other wireless communication network. In the case of Wi-Fi, the network able to deliver the service may be identified by the "Extended Service Set ID" (ESSID). Following this identification, portable device 3 is automatically connected to this network and identified by using known techniques of authentications of the Wi-Fi protocol.

Another event for triggering the delivery of the service is the time. At step 4.4, application server 4 or personal computer PC 2 or portable device 3 checks if the moment for the delivery of the service matches with the time recorded at step 3.8. If the moment is in the time window, the application server performs an authentication of the portable device (step 4.5). The authentication may be carried out by transferring the cookie stored at step 3.8. The network controls if the transmitted data are equal to that stored data in the database 5 of the network. In the case of a portable device 3, its authentication is performed for example, by comparing the number IMEI.

Once personal computer PC 2 or portable device 3 authentication is performed, the user authentication procedure is started. At step 4.6, the first vocal sequence defined at step 3.7 is played by personal computer PC 2 or portable device 3, under the system control. The first vocal sequence may be stored in the personal computer PC2 or portable device 3, or may be downloaded in real time through the network.

Following this step, the user introduces his answer (step 4.7) which is transmitted to the network. This answer corresponds to the second data structure inputted by the user, as described above in reference with step 2.5 of figure 2. This answer may be of vocal type, or graphical type, or a fingerprint but must be of the same type as that received during the parameters of delivery of the service. In case of a graphic answer, a graphical signature is extracted from the user's answer and compared with the graphical signature generated from the first data structure stored at step 3.7. At step 4.8, the first and second graphical signatures are compared by a biometric module implemented in the network, personal computer PC 2 or portable device 3. At step 4.8, the data contained in the answer is also compared with the first data structure defined by the user at step 3.7. If the answer is vocal, it is presented to a voice recognition engine which compares semantic contents of the response with the previously stored answer. The voice recognition engine is usually embedded in a specialized electronic circuit (in an ASIC for example) such as a speech recognition circuit. In the case of voice recognition, it is preferable to use authentication center 6 of the network which has specific resources for such processing. The authentication center 6 compares the vocal sequence received with the one stored sequence and if the biometric signatures are identical, the authentication of the user is performed. Authentication center 6 makes it possible to centralize the computing power for the authentications of the user on a specific server, able to process complex data such as vocal sequences, graphic signature or digital fingerprints images. Advantageously, the transmission of answer inputted by user at step 4.7 is carried out in ciphered mode, by using for example a SSL protocol. In this way, confidentiality and authentication of data are guaranteed, what is particularly useful when these data are used several times. If the inputted answer matches with the stored data, the service defined by the user is delivered on device 2 or 3 (step 4.9). The device 2 or 3 may be only an interface for delivering the service, the service being determined and managed by the network.

The steps of checking 4.3, 4.4, 4.5 and 4.8 may be carried out in any order. If at least one event does not match, the service is not delivered. If all the conditions for the delivery of service are verified, the service is delivered and the data stored at the step 3.8 are withdrawn (step 4.10). In this manner, the service may be delivered only one time.

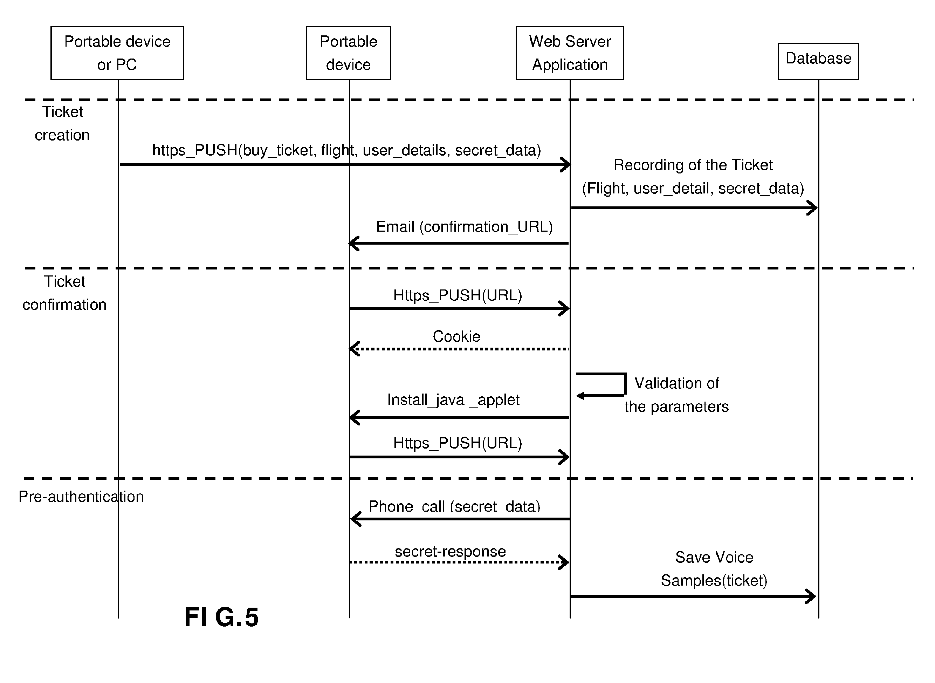

Figure 5 illustrates an example of communication exchanges between the devices of the system illustrated in figure 1 for the creation of the set of parameters for the delivery of a service on portable device 3. User 1 uses a personal computer 2 or portable device 3 to create the first parameters of the set of parameters such as: the characteristics of the service to be delivered, the location where the service will be delivered, the time of delivery, the first sequence for the user authentication and an identifier of the portable device which will deliver the service. This last identifier may typically be the phone number of the device. Application server 4 receives the parameters, records them in database 5 and sends an acknowledgement message (for example: an email) to portable device 3, said message containing an URL address of connection.

Portable device 3 uses the address of connection to launch the procedure which will gather information so that portable device 3 and user 1 could be authenticated at the date and location where the service shall be delivered. Then, application server 4 sends a cookie and/or a Java module to portable device 3. This cookie and/or this Java module will then make it possible to identify the portable device. The portable device 3 transmits in answer an identifier of session which is integrated into the set of parameters. Application server 4 then transmits to the portable device the first sequence inputted by the user at step 3.7, such as "which color is your car". In response, the user introduces a first data structure with the microphone of the portable device, this first data structure being the answer to this first sequence, for example "blue". In this manner, the same equipment is used to carry out the first introduction of the sequence of authentication and the sequence for the user authentication. That avoids the problems involved in biometric identification data which may depend on the equipment into which they are introduced. The first data structure is received by the application server and is recorded in the database. At this step, the set of parameters for delivery of the service is created. Even if a part of the parameter set may be introduced from a personal computer (for example, the location and the time of delivery of the service), the parameters for the user authentication are advantageously introduced on the portable device during the test of creation of the set of parameters.

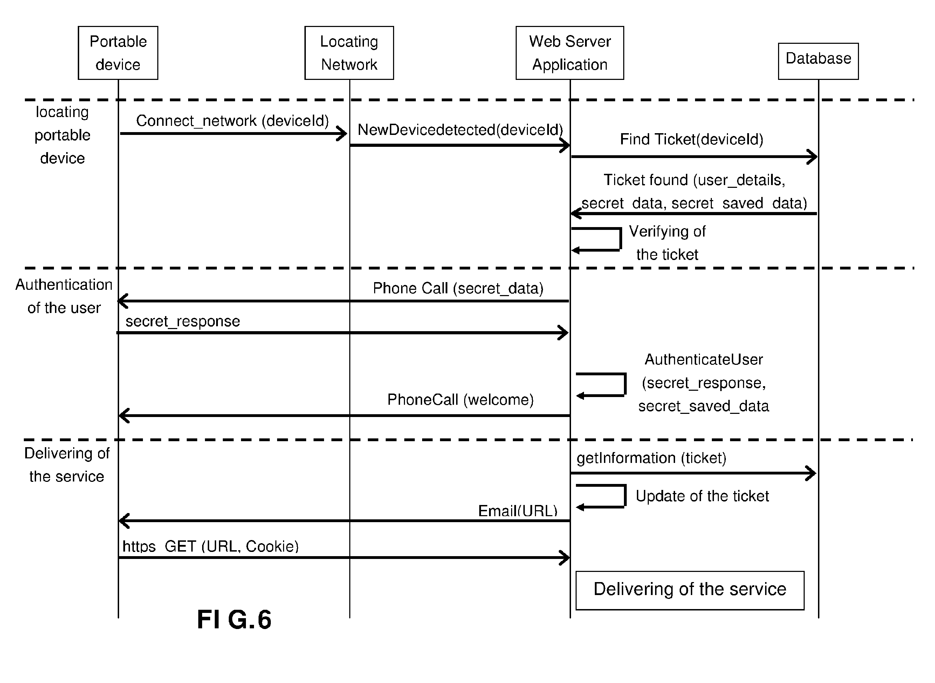

The exchanges illustrated figure 6 are carried out between portable device 3, locating network 7, application server 4 and database 5 which stores the set of parameters. Portable device 3 is located by locating network 7 which informs the application server of the presence of the portable device at a certain place. Application server 4 retrieves the set of parameters of database 5 and checks if portable device 3 is at the place and at the time for delivering the service. This check is optional, the user can launch himself the delivery of the service at the location and time he wishes. For delivering the service, the application server transmits to the portable device the first sequence of authentication, for example : "which color is your car". In response, the user introduces the second data structure ("blue") which is transmitted to the application server. The server compares the second data structure received with the first data structure recorded in the set of parameters in the database 5. According to a variant, the server delegates this task to authentication center 6.

Then, application server 4 transmits the result of the authentication to portable device 3. If the authentication is verified, as an option, the application server sends information on the nature of the service which will be delivered. This information is displayed on the screen of the portable device or can be alternatively transmitted to the user through a voice channel by connecting to a voice guide. The application server then retrieves from the database the characteristics of the service to deliver. Advantageously, an update of the service may be carried out. For example, if the service is the supply of a transport ticket and if the schedule was changed, the delivered service takes into account the new schedule. Application server transmits a request to require the portable device to transmit its identifier. Application server checks the identity of the portable device and the number of session which was delivered to it during the creation of the set of parameters, and then, delivers the service.

According to the variant described in figure 6, the network locates the portable device. According to another variant, the portable device is equipped with localization means and can itself trigger delivery of service. In the same way, if portable device 3 contains a clock, it can control the time of delivery of the service. Whatever the variant, the authentications are carried out by network, at the level of application server 4 and/or at authentication center 6.

According to another variant, the step of payment is carried out at the final step of the delivery of the service. In this case, the creation of set of parameters looks like to a reservation of a service, the delivery being also conditioned by the payment. According to another variant, there is no step of payment, neither during the creation of set of parameters, nor during the delivery of service. The access to service may be free or liable to a subscription.

According to another embodiment, during the creation of the set of parameters, a plurality of questions and answers are introduced by the user.

At the time of the delivery of the service, the user answers the first question and if the answer matches with the stored data structure, the application server triggers the playing of the second question, and so on. It is only if all the answers are in conformity with those recorded in the set of parameters, that the service is delivered.

According to another embodiment, during the creation of the set of parameters, the user defines a plurality of services which are to be delivered to the same user using the same device by using the same parameters of authentications. The choice of the service is carried out according to the place and the moment. For example, the user defines a first service delivered in a L1 location and a T1 time, a second service delivered in a L2 location and a time T2, a third service delivered in a L3 location and a time T3, and so on. When all the services have been delivered, the set of parameters is withdrawn. This embodiment makes it possible for example to define a travel comprising: the delivery of several transport tickets in different places, the reservation of a hotel, the reservation of a taxi, etc. In this way, the user may organize his voyage in full security.

An application of this invention may be the delivery of a transport ticket, a plane ticket for example. When portable device 3 held by the user is close to the airport and at a little time before the departure of the flight for which a place was previously bought, portable device 3 asks the user to be authenticated. If the authentication is successful, then the portable device guides the user in the airport and facilitates his passage at the time of control.

Another application of this invention may be the access to a show which is played at one time and at a given location. When portable device 3 held by the user is close to the place of the show at the scheduled time, then the authentication of the user is launched. If the user is the one who holds and pays for the ticket, the application server gives him a code making it possible to access to the show and indicates to him for example, its place in the hall of the show.

Where a component is referred to above, unless otherwise indicated, reference to that component (including a reference to a "means") should be interpreted as a reference to any component which performs the function of the described component (i.e. is functionally equivalent to the described component), including components which are not structurally equivalent to the disclosed structure which performs the function in the illustrated exemplary embodiments of the invention.

Where a step in a method is referred to above, unless otherwise indicated, reference to that step should be interpreted as a reference to any step which achieves the same result as the step (i.e. is functionally equivalent to the described step), including steps which achieve a stated result in different ways from those disclosed in the illustrated exemplary embodiments of the invention. As will be apparent to those skilled in the art in the light of the foregoing disclosure, many alterations and modifications are possible in the practice of this invention.

## Claims

1. Method of delivery of a service on a device (2 ; 3) communicating with a communication system, the method being **characterized in that** it comprises
a) for a user requesting said service, inputting (2.2) a first data structure associating said user with said service to be delivered;
b) for the communication system:
extracting (2.3) a first biometric signature from said first data structure and storing (2.4) a first biometric identification data comprising said first data structure and said first biometric signature;
conditioning a subsequent delivery (2.10) of said service on said device (2 ; 3) on comparing (2.8, 2.9) said first biometric identification data with a second biometric identification data comprising a second data structure inputted by the user on said device (2 ; 3) and a second biometric signature extracted from said second data structure, said service being delivered on said device (2 ; 3) if said second data structure matches said first data structure and said second biometric signature matches said first biometric signature.

2. Method according to claim 1, **characterized in that** the said device is a portable device, said delivery (2.10) of the service being further conditioned on the presence of said portable device (3) at a predetermined geographic location.

3. Method according to claim 2, **characterized in that** the presence of the portable device (3) at a predetermined geographic location is determined by said portable device.

4. Method according to any of the claims 1 to 3, **characterized in that** the delivery (2.10) of the service is further conditioned (4.4) on a predetermined temporal indication.

5. Method according to claim 4, **characterized in that** said delivery (2.10) of the service is further conditioned on a current time provided by the device (2 ; 3) matching the predetermined temporal indication.

6. Method according to any of the previous claims, **characterized in that** the first and second data structures comprise : voice-related data recorded by the user, handwriting data recorded by the user, or tactile movement data recorded by the user.

7. Method according to the claim 6, **characterized in that** it further comprises, for the user, selecting (3.7) a type of first or second data structures among at least two possible types chosen among voice-related data, handwriting data and tactile movement data.

8. Method according to any of the previous claims, **characterized in that** the user inputs several first data structures and several second data structures, the service being delivered if each of said second data structure matches said each of first data structure.

9. System of delivery of a service on a device (2 ; 3) communicating with a communication system, **characterized in that** it comprises:
a) first input means enabling a user to input a first data structure associating said user with said service to be delivered,
b) processing means on the communication system adapted to extract a first biometric signature from said first data structure,
c) storing means on the communication system adapted to store a first biometric signature identification data comprising the first data structure and the first biometric signature,
d) second input means on said device enabling the user to input a second data structure when the service has to be delivered,
e) processing means on the communication system being further adapted to condition a subsequent delivery of said service on said device (2 ; 3) on comparing said first biometric identification data with a second biometric identification data comprising said second data structure and a second biometric signature extracted from said second data structure, said service being delivered on said device (2 ; 3) if said second data structure matches said first data structure and said second biometric signature matches said first biometric signature.

10. System according to claim 9, **characterized in that** said device is a portable device (3), and **in that** the system further comprises localization means adapted to identify the geographic location of said portable device, the processing means being further adapted to condition the delivery of the service on the presence of the portable device (3) at a predetermined geographic location.

11. System according to claim 10, **characterized in that** the communication system is wireless, and said localization means use the information based on mobile antenna coverage.

12. System according to claims 10 to 11, **characterized in that** the processing means are further adapted to condition the delivery of said service on a predetermined temporal indication.

13. System according to any of the claims 9 to 12, **characterized in that in that** first and second input means enable said user to input the first and second data structures as voice-related data recorded by the user, or handwriting data recorded by the user, or tactile movement data recorded by the user.

14. System of delivery of a service according to claim 13, **characterized in that** the first or second input means are further adapted to receive from the user a selection command selecting a type of first and second data structures among at least two possible types chosen among voice-related data, handwriting data and tactile movement data.

15. System of delivery of a service according to any one of the claims 9 to 14, **characterized in that** a plurality of first data structures are inputted by the first input means and a plurality of second data structures are inputted by the second input means, the processing means delivering said service if each of said second data structure matches said each of first data structure.

16. A computer program product comprising computer-executable instructions for delivering a service to a device (2 ; 3), said instructions performing extraction of a first biometric signature from a first data structure inputted by a user, the storage of a first biometric identification data comprising said first data structure and said first biometric signature,
said instructions further performing comparing said first biometric identification data with a second biometric identification data comprising a second data structure inputted by the user on said device (3) and a second biometric signature extracted from said second data structure,
said instructions further conditioning the delivery of said service on said device (3) on said second data structure matching said first data structure and said second biometric signature matching said first biometric signature.
